# EUROPEAN PATENT APPLICATION

(11) **EP 4 663 541 A1**
(43) Date of publication of application: **17.12.2025**
(21) Application number: 24181961.4
(22) Date of filing: 13.06.2024
(51) Int. Cl.: B64C 9/20, B64D 45/00

(54) **METHOD OF DETECTING A FAILURE IN AND/OR MONITORING INTEGRITY OF A HIGH LIFT SYSTEM OF AN AIRCRAFT**

(71) Applicant: AIRBUS Operations GmbH, 21129 Hamburg (DE)
(72) Inventor: Wojack, Mario, 21129 Hamburg (DE); Thebes, Vasco, 21129 Hamburg (DE)
(74) Representative: Isarpatent

(57) **Abstract**

A method of detecting a failure in and/or monitoring integrity of a high lift system (13) of an aircraft (1) is proposed. The method includes temporarily deploying at least one spoiler surface (23), performing a detection or measurement at least while the spoiler surface is temporarily being deployed, and on the basis of the detection or measurement, evaluating presence or absence of a failure of the high lift system and/or evaluating the integrity of the high lift system.

## Description

### TECHNICAL FIELD OF THE INVENTION

The present invention relates to a method of detecting a failure in and/or monitoring integrity of a high lift system of an aircraft.

### TECHNICAL BACKGROUND

Aircraft, for instance commercial passenger or freight airplanes, comprising wings that during flight generate lift by the airflow around the airfoil, are typically equipped with devices which are adapted to increase the lift in certain phases of the flight. As the amount of lift force generated is dependent on airspeed, such high lift devices are mostly retracted during cruise flight, but are deployed when the airspeed is comparatively low, in particular during take-off and landing. Such high lift devices and systems have been in use for a long time, and various types and variants of such devices and systems have been proposed over the years.

A conventional, widespread configuration, for example, includes so-called slats as high-lift devices on the wing leading edge, and so-called flaps as high-lift devices on the wing trailing edge. The trailing-edge flaps and leading-edge slats are mounted in a manner that enables these components to be moved in a controlled way relative to a fixed portion of the wing, for deployment and retraction.

High lift devices such as flaps and slats have considerable influence on the effect of the wing and the behaviour of the aircraft. Therefore, considerable effort is made to ensure that these high lift devices can be driven and controlled in a reliable manner at all times during flight. Also, effort has been directed to detecting when during deployment or retraction of such a high lift device, jamming or skewing of a high lift surface such as a flap occurs, in order to warn the pilot and to prevent further movement of the flap that is affected.

A method and an apparatus for detecting skew and asymmetry of an airplane flap are described in US 6,299,108 B1. In order to detect jam and skew situations, a crank and link are used in US 6,299,108 B1 to convert translational motion of the flap, specifically flap carriage motion, into rotary motion that is then detected by a rotary position sensor.

US 2023/0159 183 A1 is concerned with a further jam detection system for a flap of a wing of an aircraft, wherein the jam detection system comprises a linkage that is coupled to the flap and to a support, as well as a sensor which is configured to detect a position of at least a portion of the linkage.

Moreover, DE 10 2019 109 316 A1 describes a geared rotary actuator (GRA) for a high lift system of an aircraft. For detecting cases of jamming, the GRA is provided with an internal torque sensor having two sensing elements, one of which is provided to detect the input torque at an input shaft of the actuator, while the other one is provided to detect the output torque at an output shaft. For the torque sensor, DE 10 2019 109 316 A1 describes using a magnetostrictive detection principle.

Moreover, US 2009 / 0 152 064 A1 and DE 10 2006 020 554 A1 describe an interconnecting strut for arranging between adjacent landing flaps of an aircraft. The strut has two strut elements that can be longitudinally displaced relative to each other within a permissible range. On one of the strut elements, two sensors are arranged, which are capable of identifying if a maximum permissible displacement between the strut elements is exceeded in tractive or compressive direction.

Further, it is known as well to additionally equip the wings of aircraft with so-called spoilers or spoiler surfaces, which normally remain retracted during cruise flight but can be deployed in such a manner as to disturb the airflow around the wings, in order to diminish lift and increase drag. Deployment of spoilers can be used for control of the aircraft's motion in some flight situations while the aircraft is airborne. Also, spoilers are used to assist safe braking of the aircraft after landing.

It has been found that, using conventional approaches, it can sometimes be a comparatively complex task, and may require considerable effort, to monitor proper operation of the high lift system and at the same time ensure that, as far as possible, failure indications are provided to the pilot only in case of an actually occurring malfunction. A reason is that the aircraft wing is a relatively flexible structure and that fluctuating external loads, e.g. due to gusts or a rough taxiway, can lead to fluctuating deviations of a position of a high lift surface from its nominal position. It is desirable that tolerances or margins that are applied to distinguish normal behaviour from faulty operation be defined such that malfunction is reliably detected while false alarm is minimized. This, however, is not always easy to implement.

Moreover, if aircraft of different size and weight are envisaged within a single type series, for instance, the loads acting on high lift devices vary due to the variation in weight. This may additionally render the implementation of failure detection and/or health monitoring in high lift systems more complex and may require further increased effort to implement a proper differentiation between actual failure and uncritical fluctuation.

### SUMMARY OF THE INVENTION

In view of this background, a problem to be solved by the invention is hence to propose an improved way of detecting a failure in a high lift system of an aircraft or monitoring the integrity of such a system or both, which makes it possible to further increase the reliability and/or flexibility of such detection or monitoring. Preferably, an improved way of such detection or monitoring is to be proposed which can be used in a variety of aircraft types and sizes.

This problem is solved by a method of detecting a failure in and/or monitoring integrity of a high lift system of an aircraft having the features of claim 1.

According to the invention, a method of detecting a failure in and/or monitoring integrity of a high lift system of an aircraft is provided, wherein the method includes:
- temporarily deploying at least one spoiler surface;
- performing a detection or measurement at least while the spoiler surface is temporarily being deployed; and
- on the basis of the detection or measurement, evaluating presence or absence of a failure of the high lift system and/or evaluating the integrity of the high lift system.

An idea of the invention is that a temporary deployment of a spoiler surface, which in particular may not be a full deployment but in various advantageous implementations may be a partial deployment only, can be used to temporarily increase the air loads and thus temporarily increase the load level acting on the high lift device(s) or surface(s). In other words, the invention proposes to artificially generate a load peak, within safe limits, by purposefully and temporarily deploying the spoiler surface. This may be done while extending or retracting a high lift surface, or in some implementations while the high lift surface is at rest. In this way, a quantity or condition that is to be detected and evaluated to monitor integrity and identify a failure, if present, can be amplified in order to be more easily detectable, particularly for detection during a steady flight.

Accordingly, an improved, even more reliable and versatile detection of failures in a high lift system and/or more reliable and versatile integrity or health monitoring thereof can be obtained. Advantageously, the invention may be implemented by introducing modifications of control and monitoring software, without physical modifications in existing sensor systems being mandatory for performing the invention, even though in some embodiments e.g. as described herein below, improved devices and hardware systems may be used, too. This may help to reduce cost while significantly improving failure detection and/or health monitoring.

Monitoring integrity or health of a high lift system is considered herein in particular as monitoring whether the system is free from a relatively sudden or abrupt failure condition. Yet, it will be understood that in some embodiments of the invention, the invention may be used also to monitor more gradual changes in operational behaviour over time.

Advantageous improvements and developments of the invention are contained in the dependent claims as well as in the description referring to the drawings.

In a development, the spoiler surface is temporarily being deployed during an operation of deploying or retracting at least one high lift surface of the high lift system. In another development, the spoiler surface is temporarily being deployed while at least one high lift surface associated with the detection or measurement is at rest.

In accordance with an improvement, the temporary deployment of the spoiler surface, the detection or measurement and the evaluation on the basis of the detection or measurement are repeatedly performed at intervals. This enables an improved monitoring of the operational behaviour of the high lift system over time.

In a further development, the temporary deployment of the spoiler surface, the detection or measurement and the evaluation on the basis of the detection or measurement may be performed at an interval that is chosen to be reasonable in particular depending on a type of the aircraft and/or on a mechanical design of the aircraft. Further, the interval may be chosen in a manner that makes it possible to obtain an evaluation result with respect to the integrity of the high lift system at a desirable frequency.

In some exemplary embodiments, the temporary deployment of the spoiler surface, the detection or measurement and the evaluation on the basis of the detection or measurement may, for instance, be performed at an interval of 10 to 100 flights or at an interval of approximately 50 aircraft operating hours to 500 aircraft operating hours, which may be a reasonable interval in such embodiments. Yet, other specific intervals or interval ranges may be reasonable and/or appropriate in other embodiments of the invention. In this manner, by using a reasonable, appropriate interval, the influence of the loads added by the additional spoiler deployment on various aircraft components can be limited in an effective manner, while at the same time evaluation results can be provided at a desirable frequency.

In a further improvement, the method may include obtaining a time interval, in particular aircraft operating time interval, elapsed since the most recent event of temporary deployment of the spoiler surface combined with the detection or measurement carried out at least while that deployment of the spoiler surface has been performed. Moreover, in line with this exemplary improvement, the method may for example include causing the temporary deployment of the spoiler surface, the detection or measurement and the evaluation on the basis of the detection or measurement to be performed on the basis of an evaluation of that time interval, in particular aircraft operating time interval, obtained. For example, the temporary deployment of the spoiler surface, the detection or measurement and the evaluation based thereon may be caused to be performed if that time interval obtained reaches or exceeds a pre-determined maximum interval. Obtaining and evaluating the time interval may be performed by a computer within the aircraft. For instance, the computer may monitor if and when the spoiler surface has been temporarily deployed during present or previous flight(s), and may initiate the temporary spoiler deployment as well as the detection or measurement and evaluation, based on the result of such monitoring.

In particular, the temporary deployment of the spoiler surface, the detection or measurement and the evaluation on the basis of the detection or measurement are performed during flight. Deploying the spoiler surface during flight enables the simple generation of an additional air load that is sufficient to improve the detection or measurement. A partial deployment of the spoiler surface, for example, may generate a sufficient load peak.

Further, the temporary deployment of the spoiler surface, the detection or measurement and the evaluation on the basis of the detection or measurement may in particular be performed during a flight phase in which the detection or measurement is feasible and in which, in particular, a system capable of performing the detection or measurement is operational or can be operated.

For example, the temporary deployment of the spoiler surface, the detection or measurement and the evaluation on the basis of the detection or measurement may be performed close to the end of cruise flight and/or during approach for landing.

In a development of the invention, the step of temporarily deploying the spoiler surface comprises temporarily, substantially simultaneously and substantially symmetrically deploying at least a first spoiler surface on a left wing of the aircraft and a second spoiler surface on a right wing of the aircraft corresponding to the first spoiler surface. Further, in this development, the step of performing the detection or measurement comprises symmetrically performing a detection or measurement associated with each of at least one high lift surface or group of high lift surfaces on the left wing and at least one corresponding high lift surface or group of high lift surfaces on the right wing. In this way, symmetrical additional air loads can be generated, which avoids excessively disturbing steady flight, and asymmetric detection or measurement results, if present, may additionally contribute to identify failures or malfunctions.

In accordance with an advantageous development of the invention, the method includes, on the basis of the detection or measurement, evaluating the presence or absence of a failure of a drive load path associated with a high lift surface of the high lift system and/or monitoring integrity of the drive load path. Accordingly, this development makes it possible to detect failure cases like e.g. drive load path disconnection, mechanical rupture of a member of the drive load path, or freewheeling within a drive unit or rotary actuator that is part of the drive load path.

In particular, the method includes monitoring, on the basis of the detection or measurement, if an interruption of the drive load path or an at least partial loss of load transmitted along the drive load path is present. For example, disconnect or mechanical rupture in the drive load path may lead to a substantially full loss of load transmitted along that load path, while drive-unit freewheeling, for instance, may in some cases cause partial loss of load along the drive load path.

The step of detection or measurement may in particular include detecting or measuring at least one of a load, displacement or position.

According to a development, the step of detection or measurement includes performing a detection or measurement using an interconnecting assembly that includes a first assembly component coupled to a first movable high lift surface of the high lift system and a second assembly component coupled to a second movable high lift surface of the high lift system, the first and second assembly components being displaceable relative to each other, wherein the method comprises detection of a relative displacement between the first and second high lift surfaces by at least detecting when the first assembly component reaches or leaves a pre-defined position relative to the second assembly component. The pre-defined position may in particular be an end position of a permissible range of relative displacement of the first and second assembly components. The interconnecting assembly may be configured in particular as an interconnecting strut. In this manner, a relative movement of the first and second high lift surfaces can be monitored and it becomes possible, with improved reliability and response behaviour, to detect when such relative movement exceeds a permissible range and movement of one or both of the first and second high lift surfaces deviates from the nominal behaviour. An interconnecting assembly as used in accordance with this development can be implemented in a relatively simple manner, e.g. using one or more proximity sensors and a sensing target movable with respect to the proximity sensor(s). Using the temporary spoiler deployment, the response behaviour of such an interconnecting assembly can be significantly improved. In particular, the first and second assembly components of the interconnecting assembly that is used in this development may be arranged in such a manner as to be slidingly displaceable relative to each other.

In accordance with a development, the step of detection or measurement includes performing a detection or measurement using an interconnecting assembly that includes a first assembly component coupled to a first movable high lift surface of the high lift system and a second assembly component coupled to a second movable high lift surface of the high lift system, the first and second assembly components being displaceable relative to each other, wherein the method comprises detection of a relative displacement between the first and second high lift surfaces by detecting a displacement or position value of the first assembly component relative to the second assembly component. In particular, the interconnecting assembly may be configured as an interconnecting strut. For example, the interconnecting assembly may comprise a position sensor adapted to continuously detect a displacement or position value of the first and second assembly components relative to each other. In this development, detecting an actual displacement or position value which indicates the amount, i.e. distance, by which the first and second assembly components are displaced or positioned relative to each other, makes it possible to even more precisely and flexibly evaluate whether a malfunction occurs or not. In this development, detection of an actual displacement or position value is combined with the temporary spoiler deployment, wherein the latter further improves the sensitivity of detection or measurement by amplifying the effect to be detected, if present. In particular, the first and second assembly components of the interconnecting assembly that is used in this development may be arranged in such a manner as to be slidingly displaceable relative to each other.

In a development of the invention, the step of detection or measurement includes detecting when the high lift surface reaches a pre-defined end position, in particular a pre-defined end position corresponding to a nominal fully retracted state of the high lift surface. Such a kinematic end position, e.g. high lift surface kinematic retract position, can be evaluated in a simple and reliable manner in order to detect, for example, a failure in the drive load path.

According to a development of the invention, the step of detection or measurement includes detecting a measure for a difference of an actual position of a high lift surface from a pre-defined end position thereof, in particular a pre-defined end position corresponding to a nominal fully retracted state of the high lift surface. Performing the detection in this manner provides a method having increased flexibility. For example, the evaluation of the detected difference may be adapted to the current flight phase, aircraft configuration and/or air speed. Further, temporary events such as a gust of air may be taken into account in a simpler manner. In the method of this development, too, the temporary deployment of the spoiler surface additionally increases the sensitivity of the detection or measurement by amplifying the effects to be detected.

In a development, the step of detection or measurement includes detecting a measure for an actual position of a high lift surface with respect to a pre-defined reference position thereof along a substantially entire stroke through which the high lift surface is nominally movable in accordance with pre-defined system kinematics. This further improves the flexibility of the method. In particular, it becomes possible in this manner to monitor the entire stroke of the high lift surface during movement thereof for deployment or retraction. For example, other positions different from pre-defined end positions of the high lift surface may be considered for evaluation, e.g. so-called intermediate "gated" positions in which the high lift surface may be maintained over a period of time or other intermediate positions. An actual difference relative to such a nominal intermediate or "gated" position may be used to perform integrity monitoring of the drive load path. The difference with respect to a nominal position may even be monitored substantially continuously throughout the stroke. This development may contribute to detecting failure cases like disconnect or jamming, that may each lead to skewing, in further improved manner, with the additional amplification by the temporary spoiler deployment of the effects to be detected. Moreover, a substantially continuous absolute measurement of the high lift surface position relative to the reference can be compared with a nominal curve that relates the high lift surface position to the stroke carried out by the driving actuator, for instance. Thus, for example, a difference between actual and nominal position can be calculated continuously along the stroke. Also, in an improvement, a threshold against which the difference is compared, in order to identify failure situations, can be varied along the stroke for improving the reliability of the failure detection and at the same time avoid false alarm. Also, detecting an actual position of the high lift surface relative to a reference along substantially the complete stroke facilitates detection of drive load path failures during the flight, where the high lift surface might be nominally displaced from its fully retracted end position, as well as a comparison between results detected on the left and right wings in order to identify asymmetry if present. Advantageously, such detection in flight is enhanced further by the temporary spoiler deployment.

In accordance with a development, the step of detection or measurement may include using a sensor mounted on a support structure for a high lift surface or near the support structure and fixed relative thereto. Further, in this development, the step of detection or measurement may include using a sensing target mounted on a high lift surface carriage that can be caused to move along a track defined on the support structure. Using a sensor mounted on the support structure or fixed relative thereof makes it possible to perform the method while cabling is facilitated and durability is improved. Further, using a sensing target mounted on the carriage contributes to a precise detection, based on a kinematic connection of the carriage and the high lift surface, and also makes it possible to use a sensor that can be accommodated in a well-protected location, thereby further improving durability.

According to a development of the invention, the step of detection or measurement includes detecting a value suitable as a measure for a torque transmitted at a mounting interface between an actuator that is provided along a drive load path and a fixed wing structure to which the actuator is attached. In particular, the actuator may be configured as a geared rotary actuator. This provides an alternative way of monitoring the operational behaviour of the high lift system and in particular the integrity of the drive load path. For instance, monitoring in line with this development may be performed continuously for the entire stroke travelled by the high lift surface for deployment or retraction thereof. In the method of this development, the sensitivity of the detection or measurement is improved by performing the temporary spoiler deployment. Moreover, detecting a value as a measure for a transmitted load in the form of torque may in some variants be combined with a detection or measurement that relies on a positional value or condition, for further improved reliability.

In a development of the invention, the high lift surface is configured as a trailing-edge flap or the first and second high lift surfaces are configured as first and second trailing-edge flaps.

In another development of the invention, the high lift surface is configured as a leading-edge slat or the first and second high lift surfaces are configured as first and second leading-edge slats.

### BRIEF SUMMARY OF THE DRAWINGS

The present invention is explained in more detail below with reference to the embodiments shown in the schematic figures, wherein:
- Fig. 1: shows a plan view of an exemplary aircraft in which a method in accordance with embodiments of the invention can be used for detecting a failure in and/or monitoring integrity of a high lift system;
- Fig. 2: shows a schematic detail plan view II of two adjacent trailing-edge flaps of the aircraft of Fig. 1, connected by an interconnecting assembly, used for detection and/or monitoring in accordance with a first embodiment;
- Fig. 3: schematically shows a longitudinal section of an interconnecting assembly, configured as an interconnecting strut, used in accordance with the first embodiment;
- Fig. 4: shows a detail plan view of the interconnecting assembly used in the first embodiment, along with portions of adjacent trailing edge flaps;
- Fig. 5: shows a schematic flow diagram illustrating a method in accordance with the first embodiment;
- Fig. 6: shows a detail plan view of a modified interconnecting assembly, configured as an interconnecting strut, used for detection and/or monitoring in accordance with a second embodiment, along with portions of adjacent trailing edge flaps as well as a data processing device and a bus;
- Fig. 7: illustrates a method in accordance with a third and fourth embodiment of the invention, in a schematic side view of a track station for a trailing-edge flap;
- Fig. 8: illustrates a method in accordance with a fifth embodiment of the invention, in a schematic side view of a track station for a trailingedge flap;
- Fig. 9: illustrates a method in accordance with a sixth embodiment of the invention, in a schematic side view of a track station for a trailingedge flap; and
- Fig. 10: illustrates a configuration of a detection device at a geared rotary actuator, in accordance with the method of the sixth embodiment.

In the figures of the drawing, elements, features and components which are identical, functionally identical and of identical action are denoted in each case by the same reference designations unless stated otherwise.

### DESCRIPTION OF EXEMPLARY EMBODIMENTS

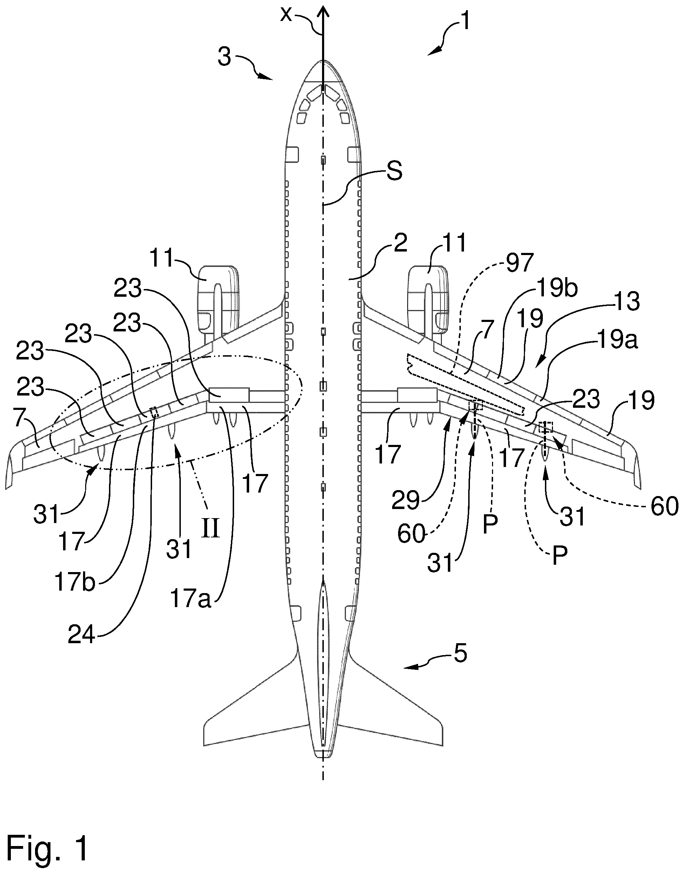

Fig. 1 shows an exemplary aircraft 1, e.g. a commercial passenger aircraft, having a fuselage 2, a nose 3, an empennage 5, wings 7 connected to the fuselage 2, and engines 11 attached to the wings 7. The configuration and shape of the aircraft 1 is substantially symmetric with respect to a vertical plane of symmetry S which contains a longitudinal axis x of the aircraft 1. An arrow indicated by reference numeral x also indicates the flight direction.

The wings 7 are each provided with a plurality of devices for selectively modifying the airflow around the airfoil of the wing 7. More specifically, the aircraft 1 is provided with a high lift system 13 comprising a plurality of high lift surfaces 17, 19 on each wing 7. The high lift surfaces 17, 19 can be extended and retracted fully or partially and are used in specific flight phases to increase the aerodynamic lift of the wing 7, in particular during take-off and landing.

The high lift system 13 of the aircraft 1 illustrated in Fig. 1 includes two trailing-edge flaps 17 at the trailing edge 29 of each wing 7, and five leading-edge slats 19 at the leading edge of each wing 7, only some of which are designated using a reference numeral in Fig. 1 for greater clarity. The number and configuration of flaps 17 and slats 19 shown in Fig. 1 is, however, exemplary, and greater or smaller numbers of flaps 17 and/or slats 19, and/or flaps 17 and slats 19 of various types, sizes and shapes, are conceivable.

In addition to flaps 17 and slats 19, each wing 7 is provided with spoiler surfaces 23, configured to selectively disturb the airflow, diminish lift and increase drag. Such spoiler surfaces 23 may be used to control the aircraft 1 e.g. during descent and are deployed in particular to assist safe braking after landing. The spoiler surfaces 23 are each movable for full or partial deployment and for retraction thereof relative to a fixed wing structure 97 by dedicated, associated spoiler actuating devices 24, one of which is schematically shown in Fig. 1 on the left wing 7. The spoiler surfaces 23 of Fig. 1 are arranged on the upper side of each wing 7. In particular, the spoiler surfaces 23 are pivotable from a retracted position, in which they are substantially flush with the upper face of the wing 7, to a fully deployed position, in which they upwardly protrude from the upper face of the wing 7. The spoiler actuating devices 24 preferably also enable the spoiler surfaces 23 to be pivoted from the retracted position into the airflow through various angles.

Further, the high lift surfaces 17, 19 are movable relative to the fixed wing structure 97 for deployment or retraction, or for bringing them into pre-defined so-called "gated" intermediate positions, by a dedicated drive arrangement that implements pre-defined system kinematics. The drive arrangement includes a drive unit 60 formed as or comprising an actuator 61, in particular a geared rotary actuator 61, and a drive mechanism at each of a plurality of track stations 31. In Fig. 1, as an example, two track stations 31 are associated with each one of the trailing-edge flaps 17. The movement of the flaps 17 and slats 19 requires a driving load acting against the air loads to which the flap 17 or slat 19 is subjected in flight. This driving load is supplied by the drive units 60 along drive load paths P at the track stations 31.

It is important that high lift devices such as flaps 17 and slats 19 can be controlled and driven in a reliable manner at all times during flight, including take-off, climb, cruise, descent and landing.

The high lift surface 17 and its support and drive arrangement are subject to gravity and friction. In case of a non-intact high lift surface drive load path P at one of the track stations 31, in particular a nominal retract position of the high lift surface, e.g. of the flap 17, may not be reached at the affected track station 31. Instead, the high lift surface 17 may still be slightly extended at that track station 31. The same applies for other high lift surfaces, e.g. the slats 19, in substantially analogous manner.

In the following, embodiments of a method of detecting a failure in and/or monitoring integrity of a high lift system 13 of an aircraft 1 are described.

The methods of the embodiments described herein are based on an evaluation of displacements of high lift surfaces relative to each other or on an evaluation of an actual position of a high lift surface in comparison with a nominal kinematic position or on an evaluation of a load in the form of torque transmitted between an actuator and a fixed wing structure. The methods of the invention enable the detection of failure cases in the high lift system, including in particular detecting a drive load path failure such as an interruption of the drive load path or an at least partial loss of load transmitted along that drive load path. The drive load path failure may e.g. be due to drive load path disconnection, mechanical rupture, or freewheeling within the drive unit 60. Further, using some of the exemplary embodiments described in the following, further failure situations like jam and skew, for instance, may be detected as well.

The method of each of the embodiments described in the following is performed during flight and includes an operation of temporarily, and e.g. briefly, deploying one or more of the spoiler surfaces 23. While the spoiler surface 23 is temporarily being deployed, a detection or measurement is performed. On the basis of the result of the detection or measurement, presence or absence of a failure of the high lift system 13 and/or integrity of the high lift system 13 is/are evaluated.

The temporary deployment of the spoiler surfaces 23, the detection or measurement and the evaluation may, for example, in variants be performed close to the end of cruise flight, during descent or approach for landing, or in other variants may be performed during another flight phase in which the spoiler deployment and the detection or measurement are feasible.

Preferably, the spoiler surfaces 23 are temporarily and simultaneously deployed in symmetric manner relative to the plane of symmetry S, while high lift surfaces 17 or 19 are being symmetrically deployed. For example, a first spoiler surface 23 on the left wing 7 and a second spoiler surface 23 on the right wing 7 which corresponds to the first spoiler surface 23 are temporarily, simultaneously and symmetrically deployed to the same extent for a brief period of time.

Moreover, preferably, a detection or measurement associated with each of at least one high lift surface, e.g. at least one flap 17 or slat 19, or group of high lift surfaces, e.g. flaps 17a, 17b or slats 19a, 19b on the left wing 7 and with each of at least one corresponding high lift surface or group of high lift surfaces on the right wing 7 is performed in a symmetric manner.

The temporary deployment of the spoiler surface 23 can be combined, in embodiments of the invention, with different detection or measurement steps, which will be described below in more detail.

While high lift surfaces such as the flaps 17 or slats 19 are usually deployed and retracted in every flight of the aircraft 1, the spoiler surfaces 23 are temporarily deployed, additionally and for a brief time assigned to detection or measurement, in a repeated manner at intervals, but not necessarily in every flight and preferably not in connection with every deployment or retraction of high lift surfaces 17, 19. Variants of the embodiments of the method described herein include a temporary deployment of the spoiler surfaces 23, the detection or measurement and the evaluation on the basis of the detection or measurement, at an interval that is reasonable based in particular on the aircraft type and/or aircraft mechanical design, wherein that interval may, in some variants, be an interval of 10 to 100 flights or an interval of approximately 50 aircraft operating hours to 500 aircraft operating hours. However, it should be noted that other intervals or interval ranges may be useful and reasonable, depending on the aircraft type or design or the desired monitoring frequency. For clarity, it is additionally noted that the spoiler surfaces 23 may, of course, usually be deployed for other purposes during flight, too.

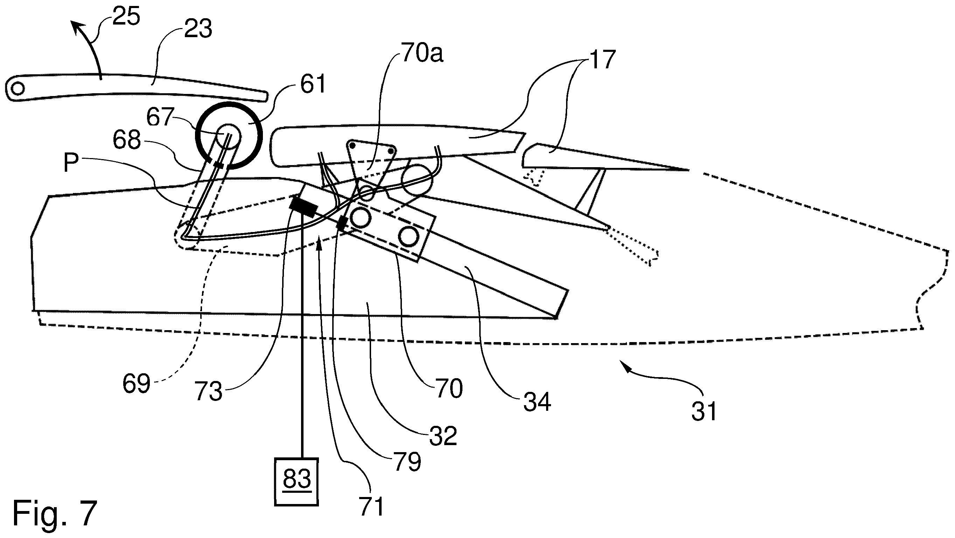

When a spoiler surface 23 is deployed from its inactive, fully retracted position, the spoiler - flap gap opens and a load suction peak occurs. The temporary deployment of the spoiler surfaces 23 in this way generates an artificial air load peak. An arrow 25 in Figs. 7-9 illustrates in exemplary manner a deployment of the spoiler surface 23.

Detection or measurement procedures such as those described below in detail in accordance with the various embodiments of the invention are supported by an increased level of air loads that are generated by the temporary wing spoiler deployment. The increased air load amplifies the effect of a failure, for example of a failure in one of the drive load paths P, reflected in a difference in position or torque that can be measured and evaluated.

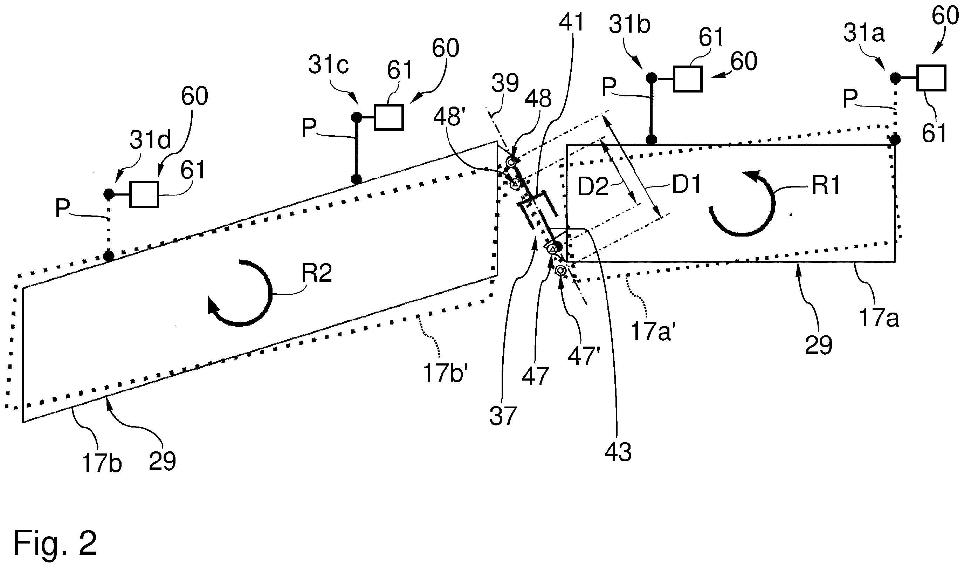

A method of a first embodiment, illustrated by Figs. 2-5, is based on detecting a displacement of adjacent high lift surfaces relative to each other that exceeds a pre-defined range.

Fig. 2 shows two trailing-edge flaps 17, specifically a first flap 17a and an adjacent second flap 17b, in a schematic detailed view II as indicated in Fig. 1, in exemplary manner for the left wing 7. With each of the first and second flaps 17a, 17b, two track stations 31 are associated. In particular, the track stations 31a and 31b are associated with the first or inboard flap 17a, and the track stations 31c and 31d are associated with the second or outboard flap 17b. Each of the first and second flaps 17a, 17b is provided with one track station that is configured as a master track capable of supporting side loads.

At each of the track stations 31a-d, a track is defined on a support structure for the high lift surface, e.g. a track following a straight path, with the flap 17a or 17b being movable relative to the support structure. A geared rotary actuator 61 of the drive unit 60 supplies a driving torque and thereby drives a pivoting motion of a crank. The crank is pivotably connected to and drives a mechanism that includes at least one intermediate member coupled to the flap 17a or 17b. A carriage, which is movably guided along the track, is coupled to the inboard or outboard flap 17a, 17b by a main support. The support structure, track, crank, intermediate member, carriage and main support are not shown in Figs. 2-4, but may for example be configured in a manner substantially analogous to a support structure 32, a track 34, a crank 68, an intermediate member 69, a carriage 70 and a main support 70a as illustrated in Figs. 7-9, described below. The drive mechanism, carriage 70 and track 34 define system kinematics along the stroke of the flap 17a, 17b, which defines the movement of the flap 17a, 17b during deployment and retraction. For each track station 31a-d, the drive unit 60 as well as the drive load path P are schematically indicated in Fig. 2.

The method is performed using an interconnecting assembly 37 configured as an interconnecting strut. The interconnecting assembly 37 includes a first, outer assembly component 41 and a second, inner assembly component 43. The first and second components 41, 43 are assembled in such a manner that a portion of the second assembly component 43 can be slidingly displaced within the first assembly component 41 along a longitudinal axis 39 of the interconnecting assembly 37.

One of the first and second assembly components 41, 43 is pivotably coupled to one of first and second movable flaps 17a, 17b, and the other one of the first and second assembly components 41, 43 is pivotably coupled to the other one of the first and second movable flaps 17a, 17b. End regions of the flaps 17a, 17b to which the assembly components 41 and 43, respectively, are coupled, are arranged adjacent to each other. The relative movement of the first and second assembly components 41 and 43 is limited by mechanical end stops of the interconnecting assembly 37. These end stops are not shown in detail in Figs. 2-4. The abutment of the first and second assembly components 41, 43 on each other by the action of the end stops creates a further, alternative load path between the inboard flap 17a and outboard flap 17b in these end positions, which helps to prevent excessive movement of an affected flap and further damage, if a drive load path P has failed.

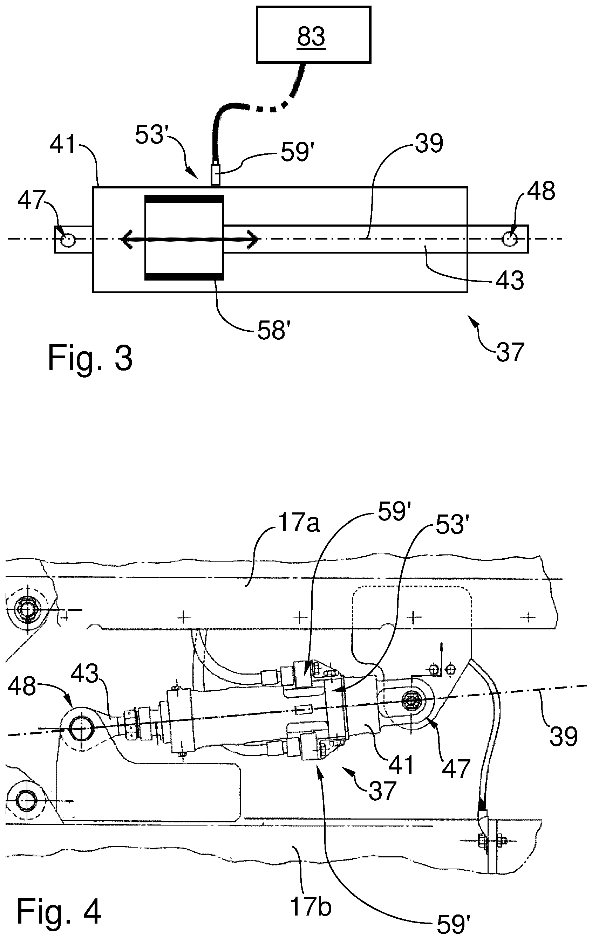

For instance, as illustrated for a variant of the first embodiment in Fig. 4 in more detail, the first, outer assembly component 41 may be coupled to the first or inboard flap 17a via a pivotable joint 47 and the second, inner assembly component 43 may be coupled to the second or outboard flap 17b via a pivotable joint 48. Yet, as schematically illustrated in Fig. 2, the arrangement may be reversed in other variants of this embodiment.

Failure detection and/or integrity or health monitoring is performed in the first embodiment using a detection arrangement 53' formed with at least one proximity sensor 59', preferably with two proximity sensors 59' as illustrated for the variant in Fig. 4. Each proximity sensor 59' is coupled to a data processing device 83, e.g. a host computer, for instance via an intermediate signal processing arrangement, not shown. The proximity sensor(s) 59' is/are fixedly connected to the first assembly component 41 and produce(s) a signal depending on whether a sensing target 58', fixedly connected to the second assembly component 43 and longitudinally movable with the component 43, is located within a detection range of the sensor(s) 59' or not. In this way, the sensor(s) 59' is/are capable of detecting whether a relative displacement of the first and second flaps 17a, 17b with respect to each other exceeds a threshold value in the direction of compression or elongation of the interconnecting assembly 37.

The strut-shaped interconnecting assembly 37 is mounted between the first and second flaps 17a and 17b in a diagonal manner and in such a way that during nominal movement of the flaps 17a-b in accordance with the system kinematics, the interconnecting assembly 37 moves in parallel, or almost in parallel, with the flaps 17a and 17b. In other words, if the flaps 17a and 17b perform a movement of deployment or retraction in accordance with the nominal system kinematics, no or only small relative displacement of the first and second assembly components 41, 43 occurs. Thus, elongation or compression of the interconnecting strut 37 is small during movement in accordance with the nominal system kinematics.

However, in case of a failure of one of the drive load paths P during the deployment or retraction operation, due to interruption of the path P or at least partial loss of load along that path P, a flap yaw movement R1 or R2 is caused.

For instance, if the drive load path P at track station 31a fails during flap deployment and the driving load at the track station 31a is therefore significantly reduced or fully lost while the drive load path P at the other track station 31b supplies full driving load, a yaw movement R1 of the first flap 17a is caused. The flap 17a is shown in Fig. 2 for the situation of such a failure at track station 31a by a dotted line and designated by reference numeral 17a', indicating an abnormal state of the flap 17a.

Further, for example, if the drive load path P at track station 31d fails during flap deployment and the driving load at the track station 31d is significantly reduced or fully lost while the drive load path P at the other track station 31c supplies full driving load, a yaw movement R2 of the second flap 17b is caused. The flap 17b is shown in Fig. 2 for the situation of such a failure at track station 31d by a dotted line and designated by reference numeral 17b', indicating an abnormal state of the flap 17b.

If the other load paths P function in nominal manner, a load path failure at the track station 31a results in an increased distance D1 between centers of the pivot joints 47 and 48, and alternatively, a load path failure at the track station 31d instead results in a reduced distance D2 therebetween. Abnormally shifted positions of the pivot joints 47, 48 are illustrated in Fig. 2 in exemplary manner by 47', 48'.

Both situations are illustrated in Fig. 2 using dotted lines. In such failure situations, the flaps 17a and 17b move relative to each other by a distance that is increased compared to normal behaviour, but is limited by the physical end stops of the interconnecting assembly 37.

In the method of the first embodiment, a signal indicating a failure is generated if the sensor 59' or the sensors 59' detect(s) that the sensing target 58' has left the detection range because the elongation or compression of the interconnecting strut 37 and the corresponding change in distance between the joints 47 and 48 exceeds a pre-defined threshold associated with elongation or compression. In other words, in the first embodiment, it is detected when the first assembly component 41 reaches or leaves a first pre-defined position as the distance between the joints 47, 48 increases and when the first assembly component 41 reaches or leaves a second pre-defined position as the distance between the joints 47, 48 decreases. Based on the failure signal, a message can be generated for the pilot, and further movement of the flaps 17a, 17b is prevented in order to avoid further damage.

Depending on the air loads acting on the flaps 17a and 17b, and also depending on which of the track stations 31a-31d is affected, the displacement effect caused by a drive load path failure may be relatively small. In order to increase the sensitivity of the detection procedure, spoiler surfaces 23 are temporarily deployed in symmetrical manner as explained above for a brief period of time, preferably while the flaps 17a and 17b are deployed or retracted. The additional load peak caused thereby amplifies the displacement effect. In this manner, a failure can be more reliably detected. In a variant, the temporary deployment of the spoiler surfaces 23 and the detection may be performed while the flaps 17a, 17b are at rest, for example at an intermediate "gated" position.

The artificial load peak created by the temporary deployment of the spoiler surfaces 23 is significant in particular in the flap tangential load component. The flap tangential load component has substantially the same orientation as the interconnecting strut 37. In this way, the load increase at the artificial peak is capable of triggering a displacement in a direction that is favorable for being well detected using the interconnecting strut 37.

In this manner, the temporary spoiler deployment enhances the displacements that are detected by the interconnecting strut 37 via the load peak, which is artificially caused by temporarily deploying the spoiler surfaces 23, preferably at the same time as the high lift surface undergoes deployment or retraction, e.g. while the flaps 17a and 17b extend from the retracted position.

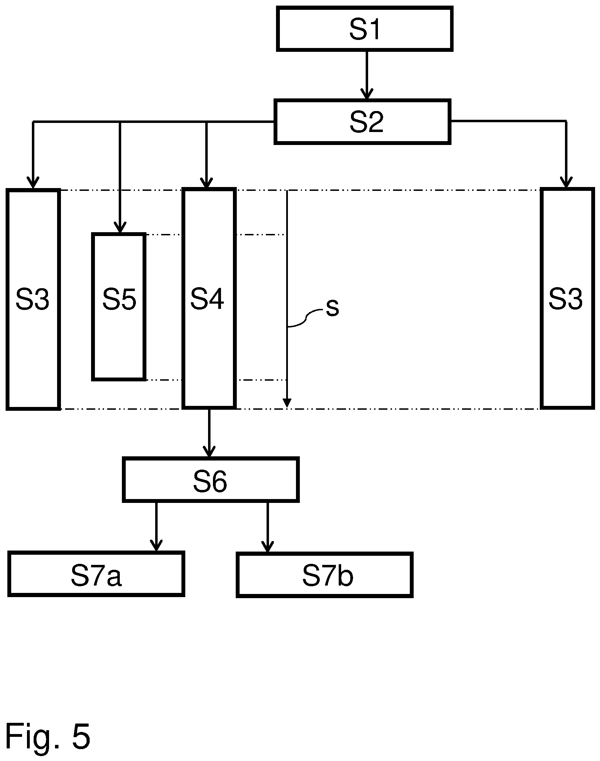

Fig. 5 illustrates various steps of the method for detecting a failure in and/or monitoring integrity of a high lift system 13 in accordance with the first embodiment in a flow diagram.

In step S1, a command for initiating an operation of deploying or retracting at least one of the high lift surfaces of the high lift system 13 is issued by the pilot, e.g. via control elements in the cockpit. In the case of the first exemplary embodiment, the pilot commands deployment or retraction of the flaps 17a, 17b.

In step S2, the data processing device 83, which may be the host computer, receives a corresponding signal and evaluates whether, while the deployment or retraction operation will be carried out, a detection or measurement for the purpose of monitoring the operational behaviour of the high lift system 13 and in particular for monitoring the integrity of the drive loads paths P associated with the flaps 17a and 17b should be carried out. In particular, in step S2, it is evaluated whether in accordance with the pre-defined interval, which may e.g. correspond to an interval of 10 to 100 flights or 50 aircraft operating hours to 500 aircraft operating hours, as explained above, or which alternatively may correspond to another reasonable interval, the detection or measurement is to be performed in connection with the deployment or retraction operation presently commanded.

If in step S2, it is determined that the interval has not yet been reached and a detection or measurement is not to be performed at this time, the process continues with a step S3, in which the flaps 17a, 17b are deployed or retracted, for instance simultaneously and symmetrically on both wings 7 with respect to the plane S, in line with the pilot's request.

Conversely, if in step S2, it is determined that detection or measurement is to be performed, the step S3 is initiated, and at the same time, a step of detection or measurement S4 starts. In the method of the first embodiment, step S4 is performed using the interconnecting assembly 37, in the manner described above. In other embodiments, described further below, step S4 may be performed using sensor devices or detection arrangements of another type and configuration. The detection or measurement step S4 may in particular be performed for both wings 7 in symmetrical manner and for corresponding high lift surfaces or groups thereof.

Fig. 5 illustrates in schematic manner a variable s that corresponds to a fraction of the stroke of the flaps 17a, 17b, which varies, for example between 0 and 1, corresponding e.g. to fully retracted and fully extended states, respectively. Step S3 in Fig. 5 may correspond to a full or partial deployment or retraction.

While the detection or measurement is being performed in step S4, a step S5 of temporarily deploying one or more spoiler surface(s) 23 is performed. Preferably, at least two corresponding spoiler surfaces 23, one on each of the wings 7, is deployed simultaneously and in symmetric manner with respect to the plane of symmetry S.

A value, measure or condition detected in step S4 is evaluated in a step S6 in order to determine the presence or absence of a failure of the high lift system 13 and/or confirm the integrity of the high lift system 13. In particular, in step S6, integrity of the drive load paths P associated with the flaps 17a, 17b or failure of one of these drive load paths P are monitored. In particular, the detection or measurement performed in step S4 is used in step S6 to identify an interruption of the drive load path P or loss of load transmitted along the drive load path P.

Depending on the result of the evaluation in step S6, a signal indicating failure of a drive load path P or a signal indicating integrity of the drive load paths P associated with the flaps 17a, 17b is generated. The signal may be used, in a step S7a, to produce a message informing the pilot about the state of the high lift system, in particular about a malfunction if present, and in a step S7b in which the flaps 17a, 17b are arrested if a failure is detected, to prevent further movement thereof. In this way, the aircraft 1 can proceed to a safe landing and appropriate actions of inspection and repair can be initiated.

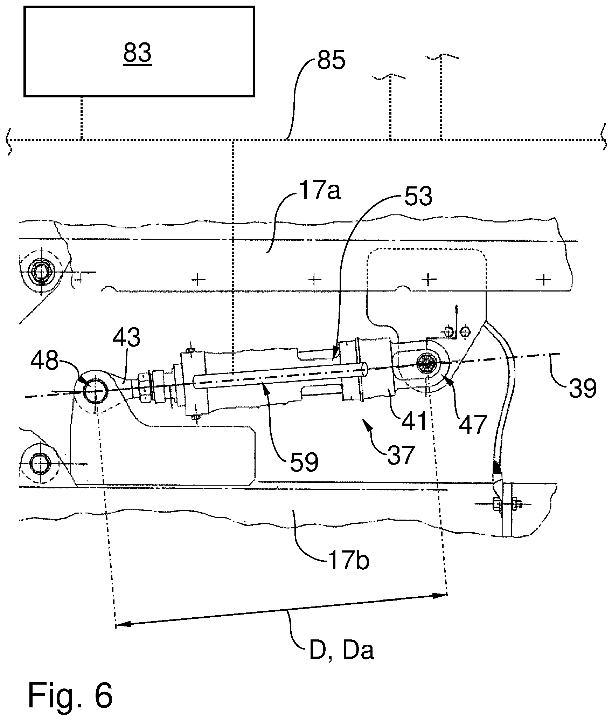

Fig. 6 illustrates a method in accordance with a second embodiment, which is based on detecting a displacement of adjacent high lift surfaces relative to each other as well. In the following, the differences of the second embodiment with respect to the first embodiment are described. Besides, reference is made to the description of the first embodiment above.

In the method of the embodiment illustrated by Fig. 6, a detection arrangement 53 formed with a linear position sensor 59 is used. The linear position sensor 59 is connected to a data processing device 83, for example a host computer, preferably using a bus 85. Using a bus, the routing of connecting cables can be facilitated and relatively slender and lightweight cabling is made possible. In variants, however, it is conceivable to connect the position sensor 59 to the data processing device 83 via an analogue signal interface instead.

For the entire stroke of the assembly components 41, 43 relative to each other permitted by the end stops, or at least for part of that stroke, preferably for a large part, the sensor 59 enables a substantially continuous detection of a displacement or absolute distance between pre-defined points on each the first and second assembly components 41, 43.

In particular, the sensor 59 enables detection of a measure or value that can be used as a numerical measure for the displacement or absolute distance of the center of the pivot joint 47 that connects the first assembly component 41 to one of the flaps 17a-b, e.g. the first flap 17a as in Fig. 6, and the center of the pivot joint 48 that connects the second assembly component 43 to the other one of the flaps 17a-b, e.g. the second flap 17b, see Fig. 6, relative to each other. Based on the displacement of the assembly components 41 and 43 relative to each other that is detected by the sensor 59, and further based on a distance D between the centers of the pivot joints 47 and 48 for a pre-defined reference state of the flaps 17a and 17b, an actually present absolute distance Da along the longitudinal axis 39 can be calculated. In other variants of this embodiment, the sensor 59 may directly provide an absolute value or measure of the actual distance Da, in other words an absolute positional value.

Preferably, the linear position sensor 59 is internally arranged within the interconnecting assembly 37 and in this manner is well protected against external influence, water, dirt etc.

By detecting a position or displacement value using the linear position sensor 59 and obtaining the current distance Da or a current difference ΔDa between Da and the reference distance D, a measure for a relative displacement between the first and second flaps 17a, 17b is detected. The distance Da or the difference ΔDa is used in accordance with the second embodiment to monitor integrity of the high lift system 13 and detect failure, in particular failure in a drive load path P.

In the second embodiment, the distance Da or distance difference ΔDa can be compared to a nominal distance Dn or nominal distance difference ΔDn for the present configuration of the high lift system 13, in particular nominal distance or nominal distance difference pre-defined depending on the degree of retraction or deployment, in other words depending on the position of the flaps 17a, 17b along their stroke. The comparison and evaluation is performed using the data processing device 83.

The sensor data, representing a detected displacement or position value, provided by the detection arrangement 53 may be evaluated by the data processing device 83, in particular the host computer, in the following manner:
- A measured displacement relative to a reference, e.g. the reference distance D, or the measured absolute distance, may be compared with a nominal value to identify a discrepancy, which can then be used to identify failure situations like jam, skew, load path disconnection, drive unit failure; skew may result from any of jamming, load path failure or drive unit failure.
- Displacement or positional values measured for left wing and right wing can be compared to detect asymmetry; if significant asymmetry is detected, this may be used to identify or confirm a failure, for example a failure in one of the drive load paths P.

Preferably during an operation of deployment or retraction of the high lift surfaces, in the second embodiment the flaps 17a, 17b, and corresponding movement of the high lift surfaces under the action of the drive load supplied via the drive loads paths P, the detection arrangement 53 including the position sensor 59 continuously detects a relative displacement of the movable high lift surfaces, in this embodiment the flaps 17a and 17b, by continuously detecting a numerical displacement value or absolute numerical positional value of the first assembly component 41 relative to the second assembly component 43. The displacement may be represented in the manner explained above e.g. as a difference ΔDa with respect to a reference distance D, or as an absolute, instantaneous distance Da, for example.

While the high lift surfaces are moved under the action of the drive load and the detection arrangement 53 is active, one or more spoiler surface(s) 23 are temporarily deployed, in a manner analogous to the method of the first embodiment. This generates an artificial air load peak that enhances deviations in the detected displacement or positional value due to failure, in particular load path failure, if such failure occurs. In this way, the sensitivity of the detection via the detection arrangement 53 is further enhanced.

The detected displacement or position value, e.g. represented as Da or ΔDa, is continuously compared with a nominal value Dn or ΔDn. The nominal value Dn or ΔDn is defined by the kinematics of the high lift system including the interconnecting assembly 37 and may in some variants be constant. In particular, however, the nominal value Dn or ΔDn is provided as a nominal curve that takes into account the variation along the stroke of the high lift surfaces. Such a curve may therefore provide Dn or ΔDn depending on s, for example, wherein s indicates a position along the stroke. For instance, s may be defined as or correspond to an angle of an output shaft of the drive unit 60 that varies between an initial and final angle, corresponding to full retraction and full deployment respectively, while the drive unit 60 is activated and drives the high lift surface. In particular, s may be defined as a normalized angle varying between 0 and 1. Thus, the nominal value may be represented as a nominal curve over s as abscissa. In order to perform the comparison, a difference is formed between the detected displacement or position value, e.g. represented as Da or ΔDa, and the constant or varying nominal value, e.g. Dn, Dn(s), ΔDn or ΔDn(s).

The resulting difference, e.g. between Dn and Da or between ΔDn and ΔDa, is continuously compared with a threshold value. The threshold value may in some variants be constant. Preferably, however, a continuous comparison of the difference obtained with a threshold value that is variable may be performed. For example, the threshold value may vary along the stroke s of the high lift surfaces, in this embodiment 17a, 17b. Further, the threshold value may vary across the operating envelope of the aircraft 1. In particular, the threshold may be adapted depending on actual air speed or ground speed and/or depending on an environmental event such as a gust or a taxiway or runway corrugation. For the purpose of adapting the threshold, pre-defined optimal threshold values for various conditions may be provided.

If the difference exceeds the threshold value, a signal indicating a failure is generated, which may be used further to indicate to the pilot that a failure has occurred, and to initiate arresting the affected high lift surfaces in order to avoid further movement and subsequent damage.

Additionally or alternatively, if the difference does not reach the threshold value, a signal indicating integrity of the portion of the high lift system formed by the high lift surfaces interconnected by the interconnecting assembly 37, for example the flaps 17a and 17b, and particularly integrity of the drive load paths P associated with these high lift surfaces, may be generated.

In a variant of the second embodiment, too, the flaps 17a, 17b can be at rest during the detection or measurement and the temporary deployment of the spoiler surfaces 23.

The methods illustrated in Figs. 2-6 are used to detect a failure in and/or monitor integrity of the drive load paths P associated with the adjacent first and second high lift surfaces, in particular the inboard and outboard flaps 17a and 17b. Moreover, the method of the embodiments illustrated in Figs. 2-6 can also be used to identify further failure cases like jam and skew resulting therefrom.

In further steps, the methods of the first and second embodiments may include detecting displacement or position values in the manner explained above at a left-side interconnecting assembly 37 mounted on the left wing 7 and at a right-side interconnecting assembly 37 of the same type mounted on the right wing 7 at a location corresponding to that of the left-side interconnecting assembly 37, and comparing the displacement or position value obtained from the detection arrangements 53 of each of the left-side and right-side interconnecting assemblies 37, for example by forming a difference. If the difference is present and in particular exceeds an asymmetry-detection threshold, which may be constant or may be variable, an asymmetry can be identified. Identification of such an asymmetry may indicate or confirm a failure in a load path P, or a jam and resulting skew. Also, for instance, such an asymmetry detection may further help to avoid false alarm that might be caused e.g. by gusts of air.

A method in accordance with a third embodiment is described below with reference to Fig. 7. Some components of a track station 31 are schematically shown in Fig. 7 for one of the trailing-edge flaps 17. At the track station 31, the wing 7 is provided with a support structure 32 for the flap 17, and a track 34, following a straight path, is defined on the support structure 32.

The support structure 32 is fixedly connected to the fixed wing structure 97, not shown in Fig. 7. Relative to the support structure 32, the flap 17 can be moved. A geared rotary actuator 61 is fixedly attached to the fixed wing structure 97 and includes an actuator output shaft 67, which supplies a driving torque for the flap 17 at the station 31. A rotational axis of the actuator output shaft 67 is substantially perpendicular to the plane of the drawing in Fig. 7.

One end of a pivotable crank 68 is attached to the actuator output shaft 67. At another end, the crank 68 is pivotably connected to an intermediate member 69, which is part of the drive mechanism and is coupled to the flap 17. Via a main support 70a, the flap 17 is supported on a high lift surface carriage 70 that is guided by the track 34 for movement along the latter, following the straight path. If the geared rotary actuator 61 rotates the crank 68 via the output shaft 67, the intermediate member 69 is pushed to the right in Fig. 7, and the carriage 70 travels along the track 34 towards the right as well. In accordance with the system kinematics defined by this mechanical arrangement, the flap 17 is deployed thereby.

The driving load is supplied by the actuator 61 along the drive load path P, schematically indicated in Fig. 7 by a double line.

In the method of the third embodiment, a detection device 71 arranged at the track station 31 is used to detect an interruption of the drive load path P or a loss of load transmitted along the path P.

The detection device 71 comprises at least one sensor 73 and a sensing target 79. The sensor 73 is configured as a proximity sensor 73 capable of sensing proximity of the sensor target 79, and is adapted to check if the high lift surface 17 has reached its pre-defined nominal fully retracted position, in the manner of a "binary" position check. In particular, such a detection can be performed after an operation of full retraction of the flap 17 has been initiated and performed, or while such an operation is being completed.

While the sensor 73 is fixedly arranged on the support structure 32 in the vicinity of one end of the track 34 or is fixedly arranged relative to the support structure 32 and close to it, the sensing target 79 is arranged on the high lift surface carriage 70, in particular on a side thereof oriented towards the sensor 73. The sensing target 79 is therefore movably arranged with respect to the sensor 73 and support structure 32. When the flap 17 has reached its pre-defined end position, in Fig. 7 defined as a nominal fully retracted state in exemplary manner, the carriage 70 is located in a pre-defined end position, as its movement is linked to that of the flap 17 by the system kinematics, and hence, the sensing target 79 assumes a corresponding pre-defined sensing target end position as well.

Using the proximity sensor 73, it can be detected when the sensing target 79 reaches and/or leaves the sensing target end position, and thereby to detect when the flap 17 reaches or leaves its nominal fully retracted state.

In the method of the third embodiment, the sensor 73 accordingly generates a boolean-type result, corresponding for example to "NEAR" if the pre-defined end position is reached or to "FAR" if that position is not reached. NEAR and FAR are terms that, as such, are common in the field of proximity sensors for referring to the result provided by such a sensor, depending on whether a target is closer to the sensor than a threshold distance or not. Using the proximity sensor 73, a reliable detection can be implemented in a relatively simple manner using durable components. In order to perform the method of the third embodiment, the sensor 73 is mounted in a precisely chosen location on the support structure 32, or fixedly arranged relative to and close to the support structure 32, to correctly detect when the end position of the carriage 70 is reached.

In the method of the third embodiment, while the flap 17 is being retracted, it is detected, using the sensor 73 and target 79, if the flap 17 reaches the pre-defined end position that corresponds to its nominal fully retracted state. During a relatively brief period of time and while the flap retraction operation is being carried out, preferably close to the completion of the flap retraction, alternatively after completion of the flap retraction, the spoiler surface 23 is temporarily being deployed. At least during the step of temporary deployment of the spoiler surface 23, the sensor 73 is activated. The process of the third embodiment just described may in analogous manner be carried out when deploying the flap 17 from the retract position.

Based on the result of the detection by the sensor 73, presence or absence of a failure of the high lift system 13 and/or integrity of the high lift system 13 is/are evaluated. A data processing device 83, connected to the sensor 73 e.g. via an intermediate signal processing arrangement, is used to provide a signal indicating failure of the drive load path P and/or a signal indicating integrity of the drive load path P depending on a condition detected by the detection device 71. Using the temporary spoiler deployment, the sensitivity of the detection can be improved.

For example, if a full retraction of the flap 17 has been or is being completed and the detection device 71 detects that the sensing target 79 has reached or reaches the pre-defined sensing target end position, a message or indication for the pilot may be provided indicating that the drive load path P at this track station 31 functions as intended and is intact. Conversely, if the sensor 73 does not detect that the sensing target 79 has reached the pre-defined sensing target end position after completion of flap retraction, a corresponding message or indication for the pilot may be provided which indicates a load path failure at that station 31. Further, based on the signal indicating failure of the load path P, the flap 17 may be arrested in its current position to prevent further movement thereof. In this manner, the aircraft 1 can still proceed to a safe landing and repairs can be made before any further flight.

Accordingly, the third embodiment provides for an evaluation of a kinematic retract position to detect load path failure cases such as, for instance, drive load path disconnect and/or freewheeling within the drive unit 60. In the third embodiment, a displacement of the carriage 70 relative to its nominal end position, which corresponds to the nominal fully retracted position of the high lift surface 17, can be detected using the sensor 73 if that displacement exceeds a pre-defined tolerance. Detection by the sensor 73 is enhanced using the temporary spoiler deployment, creating a brief air load peak, and the result of this detection is evaluated using the data processing device 83, which may be a host computer within the aircraft 1.

Fig. 7 also illustrates a method according to a fourth embodiment, which differs from the method of the third embodiment in that the detection device 71 and the evaluation of the data generated by the detection device 71 are modified. The method of the fourth embodiment uses at least one sensor 73 which is configured to measure the absolute retract position, in other words detect a value representing a distance of the sensor target 79 with respect to a sensing target end position as a reference, e.g. with respect to the fully retracted end position. The detection device 71 is used in the fourth embodiment to detect a measure for a difference of an actual position of the flap 17 from the pre-defined, nominal fully retracted state of the high lift surface 17, as an absolute value, that preferably is substantially continuously provided for a terminal portion of the stroke.

The detection or measurement using the sensor 73 and the sensing target 79 is preferably carried out, in the method of the fourth embodiment, during an operation of deploying or retracting the flap 17 or during a part of this operation, and while the spoiler surface 23 is temporarily deployed to artificially created an air load peak.

The value detected in this manner is compared to a pre-defined nominal value using the data processing device 83, e.g. a computer system within the aircraft 1. If as a result of the comparison, a difference between the nominal value and the actual value detected exceeds a pre-defined displacement threshold, a signal indicating that a load path failure occurs can be generated. As in the third embodiment, the signal provided by the sensor 73 can be used in the fourth embodiment to provide information to the pilot about the detection of a drive load path failure and/or to arrest the affected flap 17.

The fourth embodiment provides increased flexibility. In particular, the detected distance of the sensor target 79 from the sensor 73 may be evaluated in a different manner depending on flight phase, for instance. A constant threshold may be defined for triggering a signal that indicates failure, but a threshold varying with flight phase and/or aircraft configuration and/or airspeed may be conceivable for this purpose and may be useful, in particular to further improve the reliability of the detection and/or to avoid false alarm.

In the method of the fourth embodiment, too, the temporary spoiler deployment enhances the displacement that is to be detected if a failure occurs.

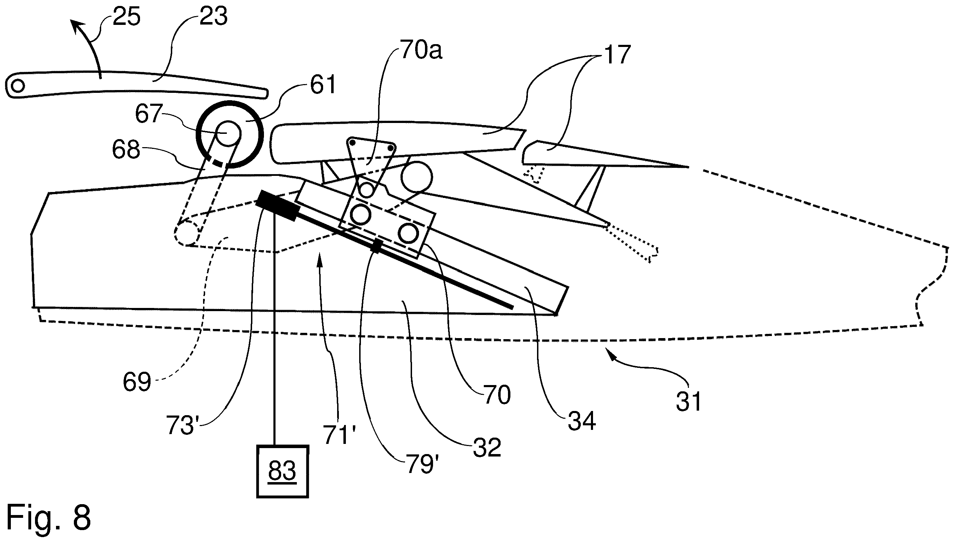

A method of detecting a failure in and/or monitoring integrity of a high lift system 13 in accordance with a fifth embodiment, by detecting failure of and/or monitoring integrity of a drive load path P for driving the flap 17, is illustrated in Fig. 8. The fifth embodiment differs from the third and fourth embodiments in that a modified configuration of the sensor and sensing target are used.

In the method of the fifth embodiment, at least one linear position sensor 73', for instance a linear encoder, is used, which is mounted on the support structure 32 or near to the support structure 32 and fixed relative thereto. A measurement target or sensing target 79' adapted to cooperate with the position sensor 73' is mounted on the high lift surface carriage 70. By being attached to the carriage 70, the sensing target 79' can be moved in a manner kinematically linked to the movement of the flap 17 along a substantially entire stroke covered by the flap 17 during deployment and retraction. The sensing target 79' thus travels with the carriage 70 as it moves through its complete stroke along the track 34. The position sensor 73' detects an absolute position of the sensing target 79', in a substantially continuous manner, with respect to a pre-defined reference position for the substantially entire stroke of the carriage 70 and thus of the flap 17. The reference position may, for instance, correspond to a pre-defined end position of the flap 17 and the carriage 70, e.g. to the nominal fully retracted position thereof. In a variant, a different reference position may be chosen instead, if useful, for example an end position corresponding to a nominal fully deployed position, or a pre-defined intermediate position. Using the fully retracted position as a reference, however, may be useful in order to provide a well-defined and well repeatable point of origin.

The detected value provided by the detection device 71' accordingly is a measure for an actual position of the flap 17 with respect to that reference position along the substantially entire stroke through which the flap 17 is nominally movable in accordance with the pre-defined system kinematics.

In the method of the fifth embodiment, the sensor 73' is used to continuously monitor the flap position for the complete stroke of the system kinematics, while the flap 17 is being deployed or retracted. During the operation of deploying or retracting the flap 17, a spoiler surface 23 is temporarily deployed. Alternatively, for example, the spoiler surface 23 may be temporarily deployed, and the detection using the sensor 73' be performed, while the flap 17 is at rest at an intermediate "gated" position.

Temporarily deploying the spoiler surface 23 while performing the detection or measurement by detection device 71' enables an improved, more reliable detection of failures even if the effect on the flap position might be small in an otherwise calm flight situation and/or in the case of an aircraft 1 of reduced weight. The artificial air load peak induced by the temporary spoiler deployment amplifies the effect to be detected, if present.

The measured stroke value can be interpreted by the data processing device 83, e.g. the host computer, to identify high lift system failure cases.

As noted above, the track 34 in Fig. 8 is substantially straight. Hence, advantageously, a linear position sensor 73' that detects a distance value along a straight path can be used. Such a position sensor can be implemented in a comparatively simple, cost-effective manner and provides a precise measurement.

In the method of the fifth embodiment, the measured stroke value can be interpreted or evaluated by the host computer according to one or more of the following steps:
- A comparison of the measured stroke value with a nominal value to identify a discrepancy, for example continuously during the movement of the high lift surface 17, 19 and/or for one or more pre-defined end or intermediate ("gated") positions of the high lift surface; the identified discrepancy is used to detect failures cases such as drive load path disconnection, drive unit failure, and also jam or skew;
- a comparison of detected left wing and right wing high lift surface track stroke, for corresponding track stations 31, in order to identify any asymmetry, if present, between left and right wing 7; the presence or absence of such asymmetry can be used to improve the evaluation of the values or measures detected at individual stations;
- a monitoring of degradation of the detected data over the operational life of the aircraft 1, for example for predicted maintenance purposes; such monitoring of degradation may, for example, include monitoring a difference of the detected data from pre-defined nominal values over time and/or monitoring a difference between values detected for the left and right wing over time, and may thereby provide a way also of health monitoring in the sense of evaluating gradual, rather long-term changes.

The fifth embodiment thus in particular provides for an evaluation of one or more high lift surface kinematic positions to detect failure cases such as drive load path disconnection or freewheeling within the drive unit 60 or geared rotary actuator 61, but can also contribute to detect failure situations likejam or skew.

In a manner analogous to the embodiments described herein above, the sensor data is monitored by a host computer that runs monitoring software configured to provide an indication for the pilot and to arrest at least the affected high lift surface if a failure is detected.

As noted above, in the high lift system 13 of the aircraft 1, the high lift surfaces 17, 19 are driven by at least one geared rotary actuator 61 (or GRA) for each high lift surface 17, 19, and in particular by one GRA 61 at each of the track stations 31. In the embodiments described herein, the geared rotary actuator 61 may, for instance, comprise an epicyclic gear set. Figs. 2, 7, 8, explained above, show the GRA 61 schematically.

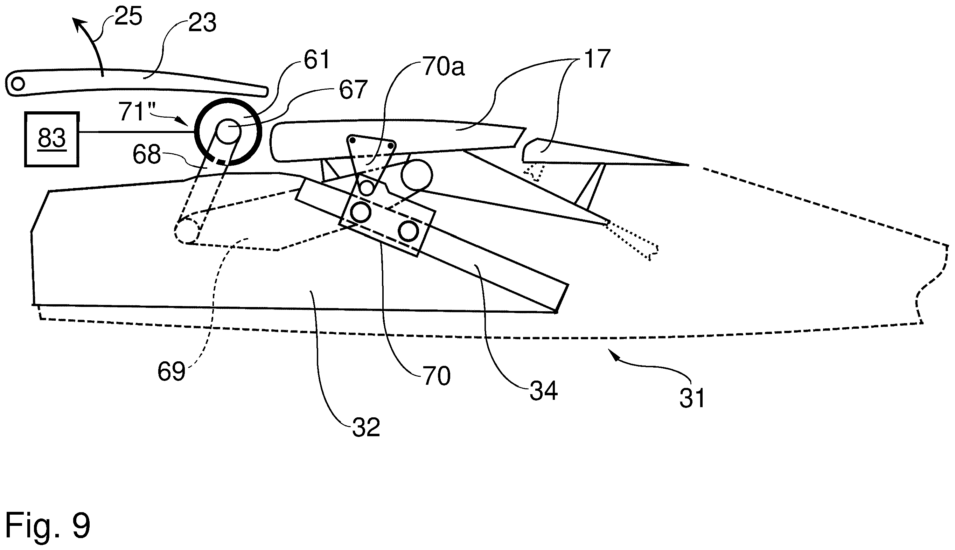

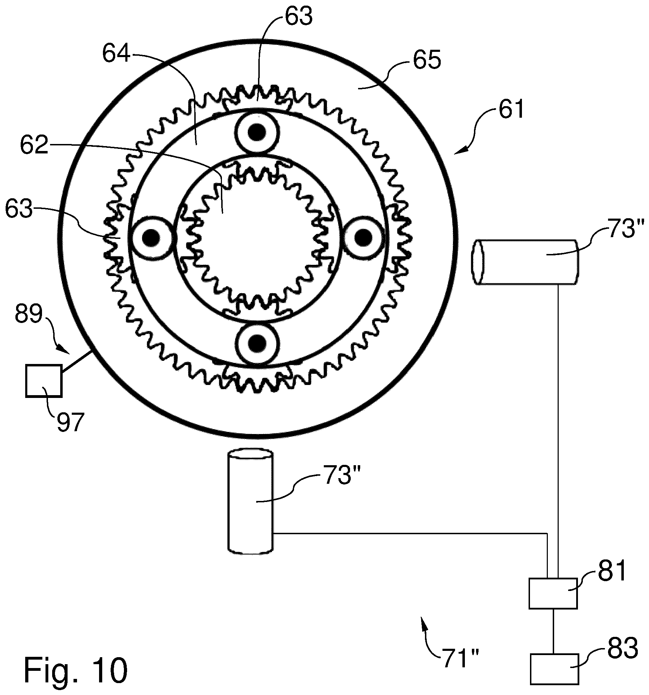

A method in accordance with a sixth embodiment is illustrated in Figs. 9 and 10. While Fig. 9 displays the GRA 61 schematically as well, a more detailed cross-sectional view of a GRA 61 having an epicyclic gear set is provided in Fig. 10.

The flap 17 is moved, in accordance with the sixth embodiment, by a drive arrangement as described above. The gear of the GRA 61 includes a sun gear 62, planet gears 63 engaged with the sun gear 62, a planet carrier 64 on which the planet gears 63 are each rotatably supported, and an outer ring gear 65 engaged with each of the planet gears 63. Further, in particular, an input shaft is connected to or formed integrally with the sun gear 62, and the output shaft 67 is connected to or formed integrally with the planet carrier 64.

The ring gear 65 is fixed with respect to the fixed wing structure 97 and is fixedly connected thereto at a mounting interface 89, which is only schematically indicated in Fig. 10. For instance, the ring gear 65 may be fixedly connected to a housing of the actuator 61 or may instead be formed with a housing of the actuator 61 in integral manner, the housing being attached in a fixed manner to the fixed wing structure 97.

In the method of the sixth embodiment, in order to detect failure of and/or monitor integrity of the drive load path P for driving the flap 17, a detection device 71" comprising load sensors 73" is used. Two sensors 73" are schematically shown in Fig. 10 in exemplary manner, but one sensor 73" or more than two sensors 73" may in variants be used instead. By the load sensors 73", loads applied to the fixed ring gear 65 and transmitted to the fixed wing structure 97 at the mounting interface 89 are measured in the form of torque about a central axis of the ring gear 65, which is perpendicular to the plane of the drawing in Fig. 10. The loads that are measured are then used to monitor the integrity of the drive load path P. Using two or more load sensors 73", redundancy can be provided. The load sensors 73" may, for example, be configured as magnetostrictive sensor(s) or as strain gauges.

The geared rotary actuator 61 drives the high lift surface, e.g. the flap 17, for deployment or retraction by pivoting the crank 68. In order to do so, the actuator 61 supplies a driving torque at the actuator output shaft 67, see Fig. 9.

Torque which is applied on the actuator output shaft 67 resulting from external loads, i.e. air loads acting on the high lift surface such as the flap 17, are supported by the ring gear 65 and are thus transmitted e.g. by mounting bolts fixing the ring gear 65 to the fixed wing structure 97.

In case of an intact high lift surface load path P, a high load transfer takes place in the ring gear 65. However, in case of a load path P which is not intact, a significantly lower load is measured by the sensors 73", which is mainly caused by internal friction within the geared rotary actuator 61. The load difference, detected as a torque difference by the sensors 73", between the load measured at the interface 89 for an intact load path P and for an impaired or interrupted load path P, can be used to detect a high lift surface load path failure.

In the sixth embodiment, the loads applied to the fixed ring gear 65 are accordingly measured during an operation of deploying or retracting the flap 17. Load data measured by the load sensors 73", see Fig. 5, may be collected by a data concentrating device 81, which in turn transmits data to a data processing device 83, e.g. a host computer, for evaluation. The loads measured using the sensors 73" are used to monitor the integrity of the drive load path P and to detect if a failure, e.g. load path interruption or at least partial loss of load along the drive load path P, occurs.

In the sixth embodiment of the invention, a air load peak is artificially generated by temporarily deploying at least one spoiler surface 23 during the operation of deploying or retracting the flap 17. The load measurement using the sensors 73" is carried out at least during the temporary deployment of the spoiler surface 23. The artificial load peak is used to enhance the effect that is to be detected by the load sensors 73" by briefly artificially increasing the air loads. In particular in situations of calm flight conditions and an aircraft of reduced weight, the increase in load acting on the flap 17, attendant on the temporary spoiler deployment, helps to detect failure in an improved manner, increases sensitivity and avoids false alarm.

While exemplary embodiments are described herein above with reference to monitoring the operational behaviour of trailing edge flaps 17a, 17b and to detecting failure cases affecting these flaps 17a, 17b, any one of the above-described embodiments is applicable in analogous manner to high lift surfaces embodied as leading-edge slats 19, for example. In Fig. 1, two adjacent leading-edge slats 19a and 19b are indicated, to which the embodiments described above may, for instance, be applied.

In Figs. 7-9, the trailing-edge flap 17 is illustrated in exemplary manner as being configured as a double-slotted flap. Yet, in variants of the embodiments of Figs. 7-9, the trailing-edge flap 17 may be embodied as a single-slot flap 17. In still further variants, the flap 17 may for instance be configured to form more than two slots when deployed.

Moreover, for additionally improving the detection and/or integrity monitoring, it is conceivable to combine two or more of the embodiments described herein above, within one high lift system and/or for the same high lift surface.

Even though the invention has been completely described above with reference to embodiments of the invention, the invention is not limited to these embodiments but may be modified in many ways.

### LIST OF REFERENCE SIGNS

- 1: aircraft
- 2: fuselage
- 3: nose
- 5: empennage
- 7: wing
- 11: engine
- 13: high lift system
- 17: trailing-edge flap
- 17a: first high lift surface (flap, nominal state)
- 17a': first high lift surface (flap, abnormal state, beyond tolerance)
- 17b: second high lift surface (flap, nominal state)
- 17b': second high lift surface (flap, abnormal state, beyond tolerance)
- 19: slat
- 19a: first high lift surface (slat)
- 19b: second high lift surface (slat)
- 23: spoiler surface
- 24: spoiler actuating device
- 25: arrow
- 29: trailing edge
- 31: track station
- 31a-d: track station
- 32: support structure
- 34: track
- 37: interconnecting assembly
- 39: longitudinal axis
- 41: first assembly component
- 43: second assembly component
- 47, 47': pivotable joint
- 48, 48': pivotable joint
- 53, 53': detection arrangement
- 58': sensing target
- 59, 59': sensor device
- 60: drive unit
- 61: geared rotary actuator
- 62: sun gear
- 63: planet gear
- 64: planet carrier
- 65: ring gear
- 67: actuator output shaft
- 68: crank
- 69: intermediate member
- 70: carriage
- 70a: main support
- 71, 71', 71": detection device
- 73, 73', 73": sensor
- 79, 79': sensing target
- 81: data concentrating device
- 83: data processing device
- 85: bus
- 89: mounting interface
- 97: fixed wing structure
- D: reference distance
- Da: actual distance
- ΔDa: difference between actual and reference distance
- Dn: nominal distance
- ΔDn: difference between nominal and reference distance
- D1: increased distance
- D2: reduced distance
- R1: flap yaw movement
- R2: flap yaw movement
- P: drive load path
- S: plane of symmetry
- S1, S2, S3: step
- S4, S5, S6: step
- S7a, S7b: step
- s: fraction of stroke
- x: longitudinal axis

## Claims

1. Method of detecting a failure in and/or monitoring integrity of a high lift system (13) of an aircraft (1), the method including:
temporarily deploying at least one spoiler surface (23),
performing a detection or measurement at least while the spoiler surface (23) is temporarily being deployed, and
on the basis of the detection or measurement, evaluating presence or absence of a failure of the high lift system (13) and/or evaluating the integrity of the high lift system (13).

2. Method according to claim 1,
**characterized in that** the spoiler surface (23) is temporarily being deployed during an operation of deploying or retracting at least one high lift surface (17, 17a, 17b; 19, 19a, 19b) of the high lift system (13)

3. Method according to claim 1 or 2,
**characterized in that** the temporary deployment of the spoiler surface (23), the detection or measurement and the evaluation on the basis of the detection or measurement are repeatedly performed at intervals.

4. Method according to any one of the preceding claims,
**characterized in that** the temporary deployment of the spoiler surface (23), the detection or measurement and the evaluation on the basis of the detection or measurement are performed during flight.

5. Method according to any one of the preceding claims,
**characterized in that** the temporary deployment of the spoiler surface (23), the detection or measurement and the evaluation on the basis of the detection or measurement are performed close to the end of cruise flight or during approach for landing.

6. Method according to any one of the preceding claims,
**characterized in that** the step of temporarily deploying the spoiler surface (23) comprises temporarily, substantially simultaneously and substantially symmetrically deploying at least a first spoiler surface (23) on a left wing (7) of the aircraft (1) and a second spoiler surface (23) on a right wing (7) of the aircraft (1) corresponding to the first spoiler surface (23) and further **in that** the step of performing the detection or measurement comprises symmetrically performing a detection or measurement associated with each of at least one high lift surface (17; 19) or group of high lift surfaces (17a, 17b; 19a, 19b) on the left wing (7) and at least one corresponding high lift surface (17; 19) or group of high lift surfaces (17a, 17b; 19a, 19b) on the right wing (7).

7. Method according to any one of the preceding claims,
**characterized in that** the method includes, on the basis of the detection or measurement, evaluating the presence or absence of a failure of a drive load path (P) associated with a high lift surface (17, 17a, 17b; 19, 19a, 19b) of the high lift system (13) and/or monitoring integrity of the drive load path (P), and in particular **in that** the method includes monitoring, on the basis of the detection or measurement, if an interruption of the drive load path (P) or at least partial loss of load transmitted along the drive load path (P) is present.

8. Method according to any one of the preceding claims,
**characterized in that** the step of detection or measurement includes detecting or measuring at least one of a load, displacement or position.

9. Method according to any one of claims 1 to 8,
**characterized in that** the step of detection or measurement includes performing a detection or measurement using an interconnecting assembly (37), in particular an interconnecting strut (37), that includes a first assembly component (41) coupled to a first movable high lift surface (17a) of the high lift system (13) and a second assembly component (43) coupled to a second movable high lift surface (17b) of the high lift system (13), the first and second assembly components (41, 43) being displaceable relative to each other, wherein the method comprises detection of a relative displacement between the first and second high lift surfaces (17a, 17b) by at least detecting when the first assembly component (41) reaches or leaves a pre-defined position relative to the second assembly component (43).

10. Method according to any one of claims 1 to 8,
**characterized in that** the step of detection or measurement includes performing a detection or measurement using an interconnecting assembly (37), in particular an interconnecting strut (37), that includes a first assembly component (41) coupled to a first movable high lift surface (17a) of the high lift system (13) and a second assembly component (43) coupled to a second movable high lift surface (17b) of the high lift system (13), the first and second assembly components (41, 43) being displaceable relative to each other, wherein the method comprises detection of a relative displacement between the first and second high lift surfaces (17a, 17b) by detecting a displacement or position value of the first assembly component (41) relative to the second assembly component (43).

11. Method according to any one of the preceding claims,
**characterized in that** the step of detection or measurement includes detecting when a high lift surface (17; 19) reaches a pre-defined end position, in particular a pre-defined end position corresponding to a nominal fully retracted state of the high lift surface (17; 19).

12. Method according to any one of the preceding claims,
**characterized in that** the step of detection or measurement includes detecting a measure for a difference of an actual position of a high lift surface (17; 19) from a pre-defined end position thereof, in particular a pre-defined end position corresponding to a nominal fully retracted state of the high lift surface (17; 19).

13. Method according to any one of the preceding claims,
**characterized in that** the step of detection or measurement includes detecting a measure for an actual position of a high lift surface (17; 19) with respect to a pre-defined reference position thereof along a substantially entire stroke through which the high lift surface (17; 19) is nominally movable in accordance with pre-defined system kinematics.

14. Method according to any one of the preceding claims,
**characterized in that** the step of detection or measurement includes using a sensor (73; 73') mounted on a support structure (32) for a high lift surface (17; 19) or near the support structure (32) and fixed relative thereto, and a sensing target (79; 79') mounted on a high lift surface carriage (70) that can be caused to move along a track (34) defined on the support structure (32).

15. Method according to any one of the preceding claims,
**characterized in that** the step of detection or measurement includes detecting a measure for a torque transmitted at a mounting interface (89) between an actuator (61), in particular a geared rotary actuator (61), that is provided along a drive load path (P) and a fixed wing structure (97) to which the actuator (61) is attached.
